# EUROPÄISCHE PATENTSCHRIFT

(11) **EP 3 086 987 B1**
(45) Veröffentlichungstag und Bekanntmachung des Hinweises auf die Patenterteilung: **15.11.2017**
(21) Anmeldenummer: 14814826.5
(22) Anmeldetag: 15.12.2014
(51) Int. Cl.: B60T 13/74

(54) **ELEKTROMECHANISCH UND HYDRAULISCH BETÄTIGBARE KRAFTFAHRZEUGBREMSE MIT WAHLWEISER SELBSTHEMMUNG**
SELECTIVELY SELF-LOCKING ELECTROMECHANICALLY AND HYDRAULICALLY ACTUATED MOTOR VEHICLE BRAKE
FREIN DE VÉHICULE À ACTIONNEMENT HYDRAULIQUE ET ÉLECTROMAGNÉTIQUE AVEC BLOCAGE AUTOMATIQUE SÉLECTIF

(30) Priorität: 23.12.2013 DE 102013022058
(43) Veröffentlichungstag der Anmeldung: 02.11.2016
(73) Patentinhaber: Lucas Automotive GmbH, 56070 Koblenz (DE)
(72) Erfinder: LOENS, Michael, 56112 Lahnstein (DE)
(74) Vertreter: Schmidt, Steffen J.
(86) Internationale Anmeldenummer: PCT/EP2014/077749
(87) Internationale Veröffentlichungsnummer: WO 2015/097010

(56) Entgegenhaltungen:
- DE-A1- 10 349 078
- DE-A1-102008 054 399
- DE-A1-102011 102 860
- KR-B1- 101 331 783
- US-A- 5 829 845

## Beschreibung

Die Erfindung betrifft eine Kraftfahrzeugbremse, insbesondere eine kombiniert hydraulisch und elektromechanisch betätigbare Kraftfahrzeugbremse, mit einer Aktuatorbaugruppe, umfassend:
- ein Bremsengehäuse,
- ein relativ zu dem Bremsengehäuse verlagerbares Stellglied zum hydraulischen oder elektromechanischen Verlagern eines Bremsbelags,
- einen motorischen Antrieb,
- eine zwischen dem motorischen Antrieb und dem verlagerbaren Stellglied angeordnete, eine Spindel aufweisende Verlagerungsmechanik,
- eine der Verlagerungsmechanik zugeordnete Getriebeanordnung, und
- eine separate Selbsthemmungsvorrichtung, die dazu ausgebildet ist, die Verlagerungsmechanik bei Bedarf zu blockieren.

Seit geraumer Zeit werden Kraftfahrzeugbremsen eingesetzt, bei denen im Falle einer normalen Betriebsbremsung während der Fahrt des Fahrzeugs die Bremsbeläge in gewohnter Weise hydraulisch verlagert werden, bei denen aber auch zur Aktivierung einer Feststellbremsfunktion eine elektromechanische Verlagerung der Bremsbeläge oder zumindest ein elektromechanisch ausgelöstes Blockieren der Bremsbeläge in einer Bremsstellung erfolgt. Derartige Kraftfahrzeugbremsen bieten den Vorteil, dass die Feststellbremsfunktion komfortabler durch einfaches Betätigen eines Aktivierungsschalters aktiviert oder gelöst werden kann.

Derartige elektromechanisch und hydraulisch betätigbare Kraftfahrzeugbremsen sind aus dem Stand der Technik bekannt.

So beschreibt das Dokument WO 2008/037738 A1 eine sowohl hydraulisch als auch elektromechanisch betätigbare Kraftfahrzeugbremse. In einer Normalbetriebssituation, das heißt während der Fahrt des Kraftfahrzeugs, wird diese Kraftfahrzeugbremse in üblicher Weise hydraulisch betätigt. Zur Aktivierung einer Feststellbremse wird allerdings die elektromechanische Betätigungsfunktion aktiviert. Dabei wird ein Elektromotor angesteuert, der über eine Verlagerungsmechanik mit einer Getriebeanordnung eine Spindel-Mutter-Anordnung antreibt. Die Getriebeanordnung ist mit einem Schneckenradgetriebe selbsthemmend ausgebildet, um zu verhindern, dass sich bei aktivierter Feststellbremse die Feststellbremswirkung reduziert. Die Selbsthemmung hat aber den Nachteil, dass nur sehr geringe Wirkungsgrade erreicht werden können, so dass die Komponenten, insbesondere der Elektromotor relativ stark ausgelegt werden müssen und eine hohe Stromaufnahme haben. Es gilt, dass sich der gesamte Wirkungsgrad des Systems aus einem Produkt der Einzelwirkungsgrade der Komponenten zusammensetzt. So ergibt sich dieser Gesamtwirkungsgrad beispielsweise aus dem Produkt des Wirkungsgrads des Motors, des Wirkungsgrads der nachgeschalteten Getriebeanordnung und der Spindel-Mutter-Anordnung. Bei Getriebeanordnungen mit Selbsthemmungseffekt lassen sich so nur Gesamtwirkungsgrade im Bereich von 30 % und weniger erreichen.

Das Dokument DE 10 2012 208 294 A1 beschreibt eine Fahrzeugbremse, bei der eine separate Selbsthemmungsvorrichtung unmittelbar an der Mutter-Spindelanordnung angeordnet ist. Insbesondere wird auf die Fig. 8 dieses Dokuments verwiesen. Dort ist gezeigt, dass die als Kupplungsvorrichtung 41 bezeichnete Selbsthemmungsvorrichtung zwischen dem Wälzkörperrampengetriebe und den Bremskolben angeordnet ist. Eine solche unmittelbare räumliche Zuordnung der Selbsthemmungsvorrichtung zu der Mutter-Spindelanordnung eines Kugelgewindetrieb hat den Nachteil, dass die bei der Aktivierung der Bremse und bei der Aufrechterhaltung eines (Feststell-) Bremszustand auftretenden Reaktionskräfte von der Selbsthemmungsvorrichtung in voller Größe getragen werden müssen. Die Selbsthemmungsvorrichtung ist dementsprechend massiv auszuführen, was zur Folge hat, dass sie erheblichen Bauraum einnimmt. Dies führt dazu, dass die Bremse insbesondere in axialer Richtung bezüglich der Gewindespindel verhältnismäßig groß zu dimensionieren ist.

Ferner zeigt das Dokument DE 10 2011 102 860 A1 eine gegenüber diesem Stand der Technik verbesserte Fahrzeugbremse, bei der die Selbsthemmungsvorrichtung zwar nahe der Mutter-Spindelanordnung angeordnet ist, jedoch in die Getriebeanordnung integriert ist, so dass Bauraum in axialer Richtung bezüglich der Gewindespindel eingespart werden kann. Diese Bremse lässt sich kompakter ausgestalten.

Grundsätzlich besteht auch ein Problem darin, die in der Selbsthemmungsvorrichtung auftretenden Reaktionskräfte abzuleiten. Dabei ist zu berücksichtigen, dass aus Gründen der Gewichtseinsparung möglichst viele Gehäusekomponenten aus leichtem Material, beispielsweise Aluminium, hergestellt werden sollten. Dies hat aber den Nachteil, dass hohe Reaktionskräfte, wie sie in Selbsthemmungsvorrichtungen der vorstehend beschriebenen Art auftreten können, nur schwer und unter möglichem Verschleiß abgeleitet werden können.

Eine Kraftfahrzeugbremse gemäß dem Oberbegriff des Anspruchs 1 ist aus US 5 829 845 A bekannt. Weiterer Stand der Technik findet sich in den Dokumenten DE 103 49 078 A1, DE 10 2008 054399 A1 und KR 101 331 783 B1.

Es ist Aufgabe der vorliegenden Erfindung, eine Kraftfahrzeugbremse bereitzustellen, die sich sowohl als Betriebsbremse als auch als Feststellbremse nutzen lässt und die hinsichtlich der Ableitung der in der Selbsthemmungsvorrichtung entstehenden Reaktionskräfte gegenüber dem Stand der Technik weiter optimiert ist.

Diese Aufgabe wird durch eine Kraftfahrzeugbremse der eingangs bezeichneten Art mit den Merkmalen des Anspruchs 1 gelöst, bei der vorgesehen ist, dass die Selbsthemmungsvorrichtung in oder an der Getriebeanordnung derart angeordnet ist, dass im Rahmen der Selbsthemmung auftretende Reaktionskräfte der Selbsthemmungsvorrichtung unter geringem Aufwand zuverlässig und verschleißsicher ableitbar sind. Vorteilhafte Weiterbildungen finden sich in den untergeordneten Ansprüchen.

Die Erfindung hat den Vorteil, dass die wenigstens drei oder vier Getriebestufen mit ihrer Übersetzung bzw. Untersetzung zumindest teilweise dazu ausgenutzt werden können, um die von den Zuspannkräften an den Bremsbelägen herrührenden Reaktionskräfte zu reduzieren, so dass die Selbsthemmungsvorrichtung kleiner dimensioniert werden kann. Darüber hinaus sieht die Erfindung ein speziell zur Ableitung der Reaktionskräfte ausgebildetes Kraftleitungsglied vor, welches hinsichtlich seiner Stabilität und Struktur dazu ausgebildet ist, die Reaktionskräfte von der Selbsthemmungsvorrichtung aufzunehmen und unmittelbar in das steife und stabile Bremsengehäuse der Kraftfahrzeugbremse abzuleiten.

Die Erfindung sieht vor, dass das Kraftleitungsglied als Aufnahmekörper ausgebildet ist, in dem die Selbsthemmungsvorrichtung zumindest teilweise aufgenommen ist, wobei der Aufnahmekörper mit dem Bremsengehäuse kraftübertragend gekoppelt ist. Dadurch kann eine raumsparende Anordnung erzielt werden.

In diesem Zusammenhang sieht die Erfindung weiter vor, dass der Aufnahmekörper als Hohlkörper ausgebildet ist und wenigstens einen Befestigungsflansch aufweist, über den er mit dem Bremsengehäuse kraftübertragend gekoppelt ist. Über den Befestigungsflansch lässt sich der Hohlkörper zuverlässig an dem Bremsengehäuse anbringen. Insbesondere kann dabei vorgesehen sein, dass der Aufnahmekörper als Tiefziehteil aus einem Stahlmaterial hergestellt ist. Dadurch ist eine einfache Herstellung bei gleichzeitig stabiler Struktur zur Ableitung der Reaktionskräfte möglich.

Zur vereinfachten Befestigung des Kraftleitungsglieds an dem Bremsengehäuse sieht eine Weiterbildung der Erfindung vor, dass der Aufnahmekörper wenigstens zwei seitliche Befestigungslaschen mit Befestigungsbohrungen aufweist.

Gemäß einer Ausführungsvariante der Erfindung kann vorgesehen sein, dass die Verlagerungsmechanik einen Kugelgewindetrieb mit einer Spindel und einer Mutter aufweist, wobei wahlweise die eine Komponente von Spindel und Mutter drehantreibbar ist und die jeweils andere Komponente von Spindel und Mutter zur Verlagerung des Stellglieds durch Drehantreiben einer Komponente von der Spindel und Mutter innerhalb des Bremsengehäuses linear verlagerbar ist.

Die Erfindung sieht ferner vor, dass die Getriebeanordnung drei oder vier Getriebestufen aufweist, wobei die Selbsthemmungsvorrichtung innerhalb der Getriebeanordnung nahe dem verlagerbaren Stellglied angeordnet ist.

Je nach Bedarf lassen sich die unterschiedlichen Getriebestufen auslegen. Bei einer bevorzugten Erfindungsvariante ist vorgesehen, dass die erste Getriebestufe und die zweite Getriebestufe jeweils als Stirnradgetriebe mit einem Untersetzungsverhältnis aus dem Bereich von zwischen 4,4:1 und 6,6:1, vorzugsweise etwa 5,4:1, ausgelegt ist. Ist eine dritte Getriebestufe vorgesehen, so kann bei dieser Ausführungsvariante ferner vorgesehen sein, dass die dritte Getriebestufe als Planetengetriebe mit einem Untersetzungsverhältnis aus dem Bereich von zwischen 6,4:1 und 8,6:1, vorzugsweise etwa 7,125:1, ausgebildet ist, wobei das Kraftleitungsglied vorzugsweise als Hohlrad ausgebildet ist.

Bei einer bevorzugten Ausführungsform der Erfindung ist vorgesehen, dass der Aktuator ein Gesamtuntersetzungsverhältnis aus dem Bereich von zwischen 115:1 und 400:1, vorzugsweise etwa 208:1 aufweist. Eine solche Auslegung des Gesamtuntersetzungsverhältnisses hat sich hinsichtlich der Kraftübertragung und der Dimensionierung als besonders vorteilhaft erwiesen.

Hinsichtlich der Anordnung der Selbsthemmungsvorrichtung sieht die Erfindung vor, dass die Selbsthemmungsvorrichtung der dem verlagerbaren Stellglied nächsten Getriebestufe der Getriebeanordnung vorgeschaltet ist. Diese Anordnung der Selbsthemmungsvorrichtung mit dem erfindungsgemäßen Kraftleitungsglied hat den Vorteil, dass die beim Blockieren der Verlagerungsmechanik auftretenden Reaktionskräfte unter geringem Aufwand über das Kraftleitungsglied unmittelbar in das Gehäuse ableitbar sind.

Die Erfindung sieht vor, dass die Selbsthemmungsvorrichtung mit einer Schlingfederkupplung ausgebildet ist, die eine Drehmomentübertragung von dem motorischen Antrieb zu der Spindel zulässt und zum Blockieren einer Drehmomentübertragung von der Spindel zum motorischen Antrieb ausgebildet ist. Mit einer solchen Schlingfederkupplung lassen sich hohe Wirkungsgradverluste vermeiden, da die Schlingfederkupplung in ihrem gelösten Zustand eine weitgehend direkte und nahezu verlustfreie Übertragung zulässt, im geschlossenen Zustand jedoch zuverlässig blockiert. In diesem Zusammenhang kann erfindungsgemäß vorgesehen sein, dass der Schlingfederkupplung ein Schaltelement zugeordnet ist, welches in einer ersten Schaltstellung eine Drehmomentübertragung von der Spindel zu dem motorischen Antrieb zulässt und bei Erreichen einer zweiten Schaltstellung die Schlingfederkupplung dazu veranlasst, eine Drehmomentübertragung von der Spindel zu dem motorischen Antrieb zu blockieren. Ein solches Schaltelement kann beispielsweise eine meanderförmige Feder sein.

In diesem Zusammenhang kann ferner vorgesehen sein, dass die Schlingfederkupplung als Schlingfeder eine um eine Angriffsfläche mit wenigstens einer Wicklung gewickelte Schraubenfeder mit zwei Enden aufweist, die mit ihrem einen Ende drehmomentübertragend mit einem ersten Getrieberad und mit ihrem zweiten Ende drehmomentübertragend mit einem zweiten Getrieberad koppelbar ist. Die wenigstens eine Wicklung ist dabei in Anlage mit einer Oberfläche der Angriffsfläche. Bei dieser Ausführungsvariante der Erfindung ist bevorzugt vorgesehen, dass jedes der Getrieberäder jeweils wenigstens eine Klaue aufweist, die mit dem jeweils dem Getrieberad zugeordneten Ende der Schraubenfeder in drehmomentübertragenden Eingriff bringbar ist. Die Klauen dienen sozusagen zur kraft- und drehmomentübertragenden Kopplung des jeweiligen Getrieberads mit der zwischen diesen angeordneten Schraubenfeder. Die Schraubenfeder ist das Kraftübertragungselement, das eine Kraftübertragung von dem motorischen Antrieb zu der Spindel hin zulässt und in der entgegengesetzten Richtung blockiert. Dies wird gemäß einer Ausführungsvariante der Erfindung insbesondere dadurch erreicht, dass sich die Schraubenfeder bei einer Drehmomentübertragung vom motorischen Antrieb zu der Spindel bezüglich der Angriffsfläche etwas radial aufweitet, so dass sie sicher bei der Drehmomentübertragung auf der Angriffsfläche abgleitet, und dass sich die Schraubenfeder im Falle einer Drehmomentübertragung von der Spindel zum motorischen Antrieb bezüglich der Angriffsfläche radial zusammenzieht, wobei sie an der Angriffsfläche radial derart angreift, dass sie eine Drehmomentübertragung sperrt. Beim Blockieren zieht sich die Schraubenfeder also um die Angriffsfläche herum zu und sorgt so in Folge der Umschlingung für starke Reibungskräfte, die
schließlich eine weitere Bewegung und damit Drehmomentübertragung über die Schraubenfeder verhindern. Sie blockiert das Getriebe in diesem Zustand.

Wird die Kraftfahrzeugbremse in einer Ausführungsvariante sowohl als Betriebsbremse als auch als Feststellbremse eingesetzt, so kann es erforderlich sein, für die Funktion als Betriebsbremse in gewissem Rahmen eine Drehmomentübertragung von der Spindel zum motorischen Antrieb hin zuzulassen. Im Rahmen der Feststellbremsfunktion ist eine solche Drehmomentübertragung aber aus den genannten Gründen zu unterbinden. Dies bedeutet, dass für die Funktion als Betriebsbremse und für die Funktion als Feststellbremse sozusagen entgegengesetzte Anforderungen vorliegen. Die vorliegende Erfindung löst in einer Ausführungsvariante die Differenzierung zwischen Betriebsbremsfunktion und Feststellbremsfunktion durch Ausnutzen der der Tatsache, dass zur Aktivierung der Feststellbremse üblicherweise wesentlich höhere Momente bzw. Spannkräfte eingesetzt werden, als im Rahmen der Betriebsbremsfunktion. Je nach Größe bzw. Betrag die eingesetzten Spannkräfte kann also zwischen Betriebsbremsfunktion und Feststellbremsfunktion "umgeschaltet" werden. Konstruktiv wird dieses Umschalten dadurch erreicht, dass bei dieser Ausführungsvariante der Schlingfederkupplung ein Schaltelement zugeordnet ist, welches in einer ersten Schaltstellung eine Drehmomentübertragung von der Spindel zu dem motorischen Antrieb zulässt und bei Erreichen einer zweiten Schaltstellung die Schlingfederkupplung dazu veranlasst, eine Drehmomentübertragung von der Spindel zu dem motorischen Antrieb zu blockieren. Dieses Schaltelement schaltet in Abhängigkeit von der einwirkenden Spannkraft. Dabei ist es erfindungsgemäß möglich, dass das Schaltelement wenigstens ein elastisches Deformationselement umfasst. Das wenigstens eine Deformationselement erlaubt im Rahmen eines bestimmten Deformationsgrades eine Kraftübertragung in beiden Richtungen zwischen motorischem Antrieb und Spindel. Ab einer bestimmten spannkraftbedingten Deformation erreicht das wenigstens eine Deformationselement die zweite Schaltstellung, in der dann eine Kraftübertragung vom motorischen Antrieb zur Spindel hin weiterhin möglich ist, in der entgegengesetzten Richtung aber blockiert wird. Insbesondere kann dabei vorgesehen sein, dass das Schaltelement seine erste oder zweite Schaltstellung nach Maßgabe einer zwischen dem ersten Getrieberad und dem zweiten Getrieberad auf die Schlingfeder wirkenden Spannkraft einnimmt.

Eine bevorzugte Ausführungsvariante der Erfindung sieht vor, dass die Getriebeanordnung einen Planetengetriebemechanismus aufweist. Ferner kann in diesem Zusammenhang erfindungsgemäß vorgesehen sein, dass der motorische Antrieb einen Elektromotor aufweist, dessen Ausgangswelle ein Sonnenrad des Planetengetriebemechanismus aufweist, wobei ein Hohlrad des Planetengetriebemechanismus gehäusefest angeordnet ist, und wobei Planetenräder des Planetengetriebemechanismus an einem im Gehäuse drehbar gelagerten Planetenträger drehbar gelagert sind. Dabei ist es erfindungsgemäß möglich, dass die Selbsthemmungsvorrichtung in ein Sonnenrad des Planetengetriebemechanismus integriert ist.

Die Erfindung wird im Folgenden beispielhaft anhand der folgenden Figuren erläutert. Es stellen dar:
- Fig. 1: eine räumliche Außenansicht für eine Aktuatorbaugruppe zur Erläuterung der technischen Hintergründe der erfindungsgemäßen Kraftfahrzeugbremse;
- Fig. 2: eine achsenthaltende Schnittansicht durch die Aktuatorbaugruppe der Kraftfahrzeugbremse gemäß Figur 1;
- Fig. 3: eine freigeschnittene Ansicht des Elektromotors, der Getriebeanordnung und der Spindel;
- Fig. 4: eine Explosionsansicht zur Erläuterung der Schlingfederkupplung;
- Fig. 5: eine achsorthogonale Schnittansicht der Anordnung aus zwei Getrieberädern mit Schlingfederkupplung;
- Fig. 6: eine Explosionsansicht zur Veranschaulichung der Anbringung der Schlingfederkupplung mittels eines topfartigen ausgebildeten Kraftleitungsglieds;
- Fig. 7: eine Schnittansicht zur Darstellung des Kraftleitungsglied innerhalb der Getriebeanordnung;
- Fig. 8: eine schematische Ansicht einer Ausführungsform zu Erläuterung der Wirkung des Kraftleitungsglieds; und
- Fig. 9: eine schematische Ansicht einer alternativen Ausführungsform zu Erläuterung der Wirkung des Kraftleitungsglieds.

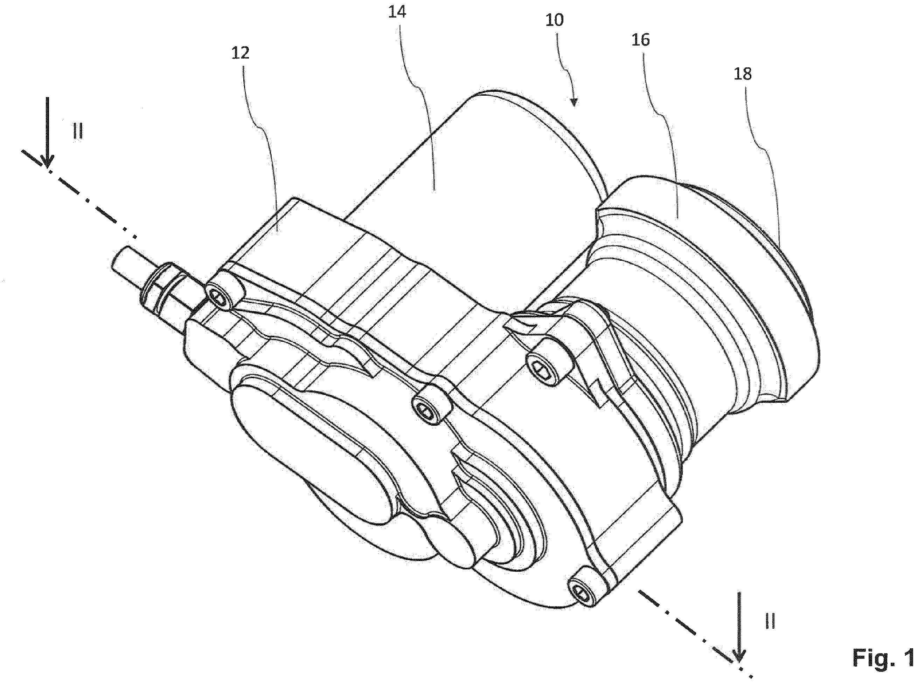

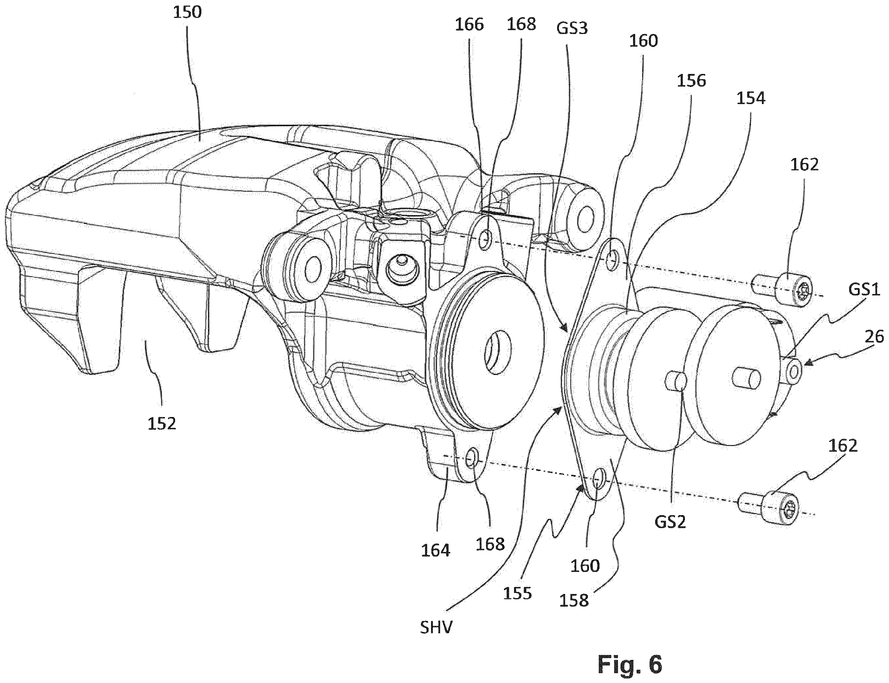

In Figur 1 ist eine Aktuatorbaugruppe einer Kraftfahrzeugbremse in räumlicher Darstellung gezeigt und allgemein mit 10 bezeichnet. Die Figuren 1-5 dienen zur Erläuterung der technischen Hintergründe der Erfindung. Die eigentlichen beispielhaften Ausführungsformen werden mit Bezug auf Figuren 6 bis 9 beschrieben.

Figur 1 zeigt ein Gehäuse 12, in dem eine Getriebeanordnung angeordnet ist, sowie ein Teilgehäuse 14 zur Unterbringung eines Antriebsmotors und ein weiteres Teilgehäuse 16, in dem ein verschiebbarer Kolben 18 angeordnet ist, mit dem ein nicht gezeigter Bremsbelag in einer Bremseinheit einer Kraftfahrzeugbremse bremswirksam verschoben werden kann. Die in Figur 1 gezeigte Aktuatorbaugruppe 10 der erfindungsgemäßen Kraftfahrzeugbremse lässt sich in üblicher Weise beispielsweise in eine Schwimmsattelbremse einbauen. Hierzu wird auf das Dokument WO 2009/046899 A1 verwiesen, wo eine solche Einbausituation exemplarisch gezeigt ist. Dieses Dokument ist eine Anmeldung der vorliegenden Anmelderin. Da es im Folgenden auf die Aktuatorbaugruppe bestehend aus motorischem Antrieb und Verlagerungsmechanik zur Verlagerung des Bremsbelags ankommt, konzentriert sich die folgende Beschreibung auf diese Komponenten. Auch in den Figuren sind nur entsprechende Komponenten gezeigt.

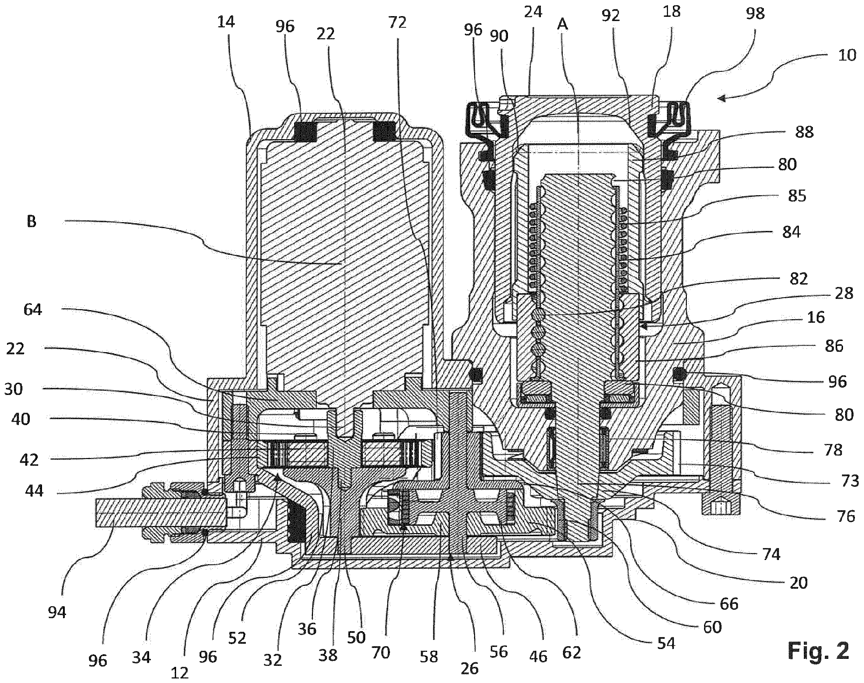

Figur 2 zeigt eine achsenthaltende Querschnittansicht durch die in Figur 1 gezeigte Antriebseinheit 10. Man erkennt, dass das Gehäuse 12 mehrteilig aufgebaut ist und sich aus einem Gehäusedeckel 20, dem Teilgehäuse 14 zur Aufnahme eines Elektromotors 22 und dem Teilgehäuse 16 zur verlagerbaren Aufnahme des Kolbens 18 zusammensetzt. Der Kolben 18 ist entlang der Längsachse A in an sich bekannter Weise hydraulisch und elektromechanisch verlagerbar. Seine exponierte Oberfläche 24 wirkt in üblicher Weise mit einer nicht gezeigten Bremsbelaganordnung zum Erzielen einer Bremswirkung zusammen. Eine hydraulische Verlagerung erfolgt in bekannter Weise während der Betriebsbremsung. Eine elektromechanische Verlagerung erfolgt zum Aktivieren und Lösen der Feststellbremsfunktion.

Im Folgenden soll im Detail auf die elektromechanische Verlagerungsmechanik eingegangen werden.

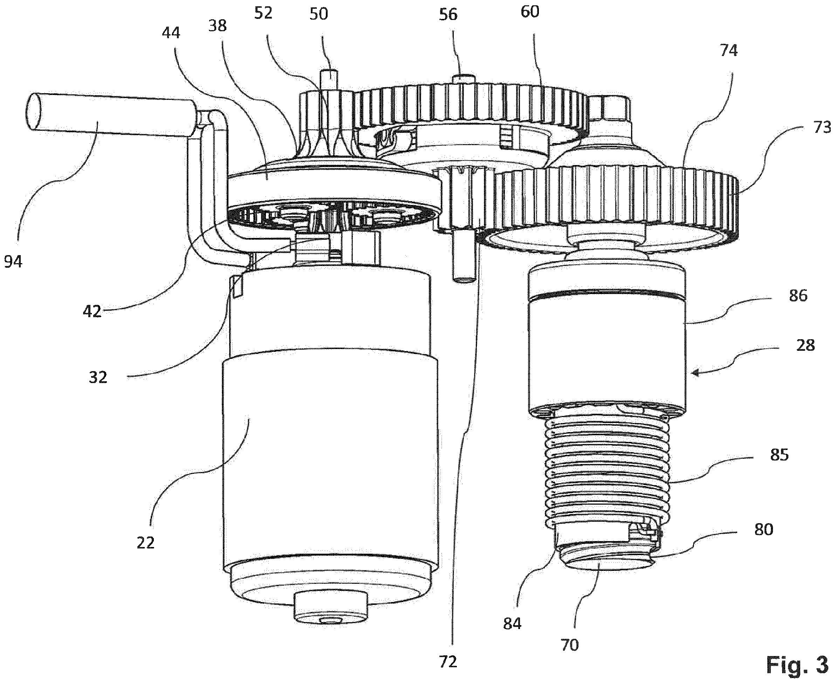

Die Verlagerungsmechanik umfasst eine Getriebeanordnung 26 sowie eine Mutter-Spindel-Anordnung 28. Beide Grundkomponenten der Verlagerungsmechanik sind zusammen mit dem Elektromotor 22 freigeschnitten in Figur 3 dargestellt. Die Getriebeanordnung 26 dient dazu, eine Drehbewegung des Elektromotors 22 in eine entsprechende Linearbewegung des Kolbens 18 entlang der Längsachse A umzusetzen. Im Einzelnen weist der Elektromotor 22 eine sich entlang der Motorlängsachse B erstreckende Motorausgangswelle 30 auf. Diese ist mit einem Zahnrad 32 drehfest gekoppelt. Das Zahnrad 32 dient als Sonnenrad eines Planetengetriebes 34. Das Zahnrad 32 weist in seinem motorfernen Ende einen Lagerzapfen 36 auf. Auf diesem Lagerzapfen 36 ist drehbar ein Planetenträger 38 gelagert, der seinerseits wieder mehrere Lagerzapfen 40 aufweist. Die Lagerzapfen 40 dienen dazu, um Planetenräder 42 zu lagern, die mit dem Zahnrad 32 in kämmendem Eingriff stehen.

Radial außerhalb der Planetenräder 42 ist ein Hohlrad 44 gehäusefest angeordnet. Hierzu dient ein weiteres Gehäuseteil 46. Der Planetenträger 38 ist in diesem Gehäuseteil 46 mit einem Lagerzapfen 50 drehbar gelagert. Er weist zwischen den Lagerzapfen 40 und seinem Lagerzapfen 50 eine Außenverzahnung 52 auf. Diese Außenverzahnung 52 kämmt mit einem ersten Getrieberad 54, das auf einem gehäusefesten Stator 56 über einen radial inneren Lageabschnitt 58 drehbar gelagert ist und an seinem Außenumfang eine Außenverzahnung 60 aufweist. Das Getrieberad 54 ist topfartig ausgebildet. In seinem Inneren erstreckt sich ein Reibradabschnitt 62, der an dem Stator 56 angeformt und damit ebenfalls drehfest im Gehäuse 12, insbesondere drehfest am Gehäuseteil 46 und einem weiteren Gehäuseteil 64, angebracht ist, beispielsweise durch Einpressen. Auf dem Stator 56 ist ein zweites Getrieberad 66 drehbar gelagert. Dieses zweite Getrieberad 66 kann über eine Schlingfederkupplung 70 zur Drehmomentübertragung mit dem ersten Getrieberad 54 gekoppelt werden. Hierauf wird im Folgenden noch im Detail eingegangen. Das zweite Getrieberad 66 weist an seinem vom ersten Getrieberad 54 abgewandten Abschnitt eine Außenverzahnung 72 auf. Diese kämmt mit einer Außenverzahnung 73 eines Abtriebszahnrads 74, das drehfest auf einer Spindel 76 der Mutter-Spindel-Anordnung 28 gelagert ist.

Man erkennt in Figur 2, dass die Spindel 76 über ein Radialnadellager 78 und ein Axiallager in dem Gehäuseteil 16 gelagert ist. Die Spindel 76 weist an ihrem Außenumfang eine Gewindeformation 80 auf, in der Wälzkörper 82 aufgenommen sind. Die Wälzkörper 82 sind in einem Wälzkörperkäfig 84 gehalten, der über eine Schraubenfeder 85 in seine in Figur 2 und 3 gezeigte Ausgangsstellung vorgespannt ist. Auf den Wälzkörpern 82 lagert eine Mutter 86, die bei einer Drehbewegung der Spindel 76 in üblicher Weise eine Linearbewegung innerhalb des Gehäuseteils 16 ausführt. Die Mutter 86 ist fest mit einem Koppelelement 88 verbunden, das sich bei der Bewegung der Mutter 86 entsprechend mit verlagert. Das Koppelelement 88 weist an seinem freien Ende eine konische Koppelfläche 90 auf, die mit einer korrespondierenden Kolbenfläche 92 im Inneren des Kolbens 18 in Eingriff bringbar und zusammen dem Kolben 18 zur Verlagerung desselben und damit zur Verlagerung des nicht gezeigten Bremsbelags verschiebbar ist.

Ferner erkennt man in Figur 2 ein Anschlusskabel 94, sowie verschiedene Dichtungen 96 um die Gehäuseteile zueinander und daran angeschlossene Komponenten abzudichten bzw. gedichtet zu führen. Schließlich erkennt man noch dass der Kolben 18 mit einem Balg 98 gedichtet ist.

In den Figuren 2 und 3 erkennt man Einzelheiten der Verlagerungsmechanik.

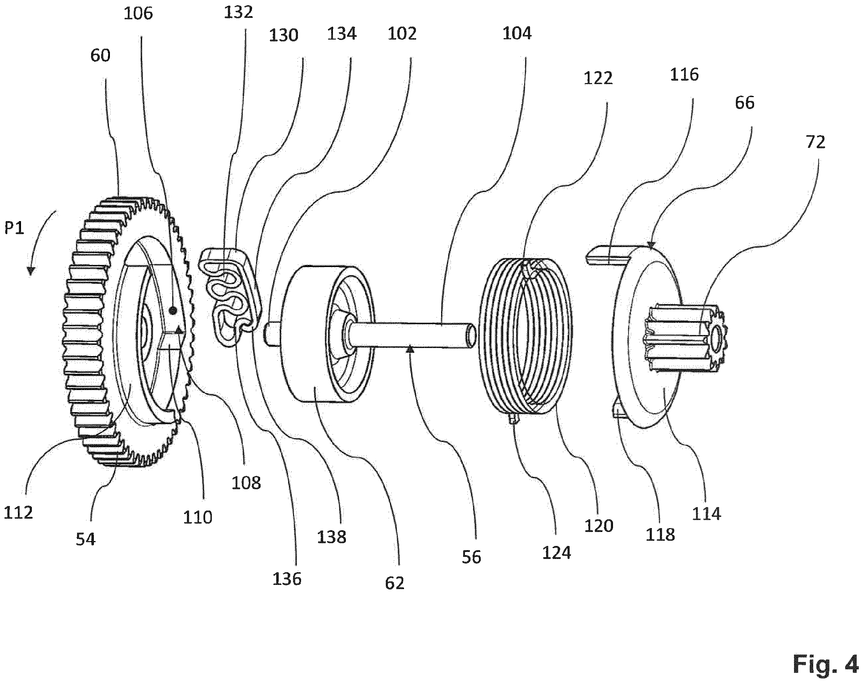

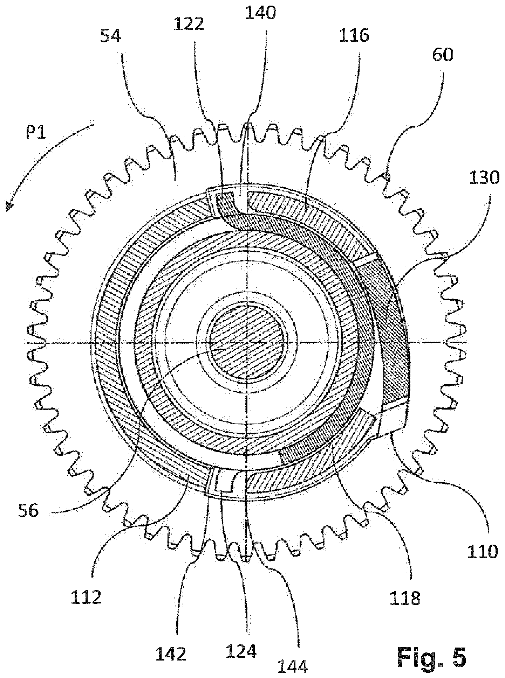

Wendet man sich nun den Figuren 4 und 5 zu, so erkennt man darin den Aufbau und die einzelnen Komponenten der Schlingfederkupplung 70. Im Inneren der Schlingfederkupplung 70 ist der Stator 56 mit seinem Reibradabschnitt 62 vorgesehen. Wie bereits ausgeführt, ist der Stator 56 gehäusefest und damit unverdrehbar über zwei Lagerzapfen 102, 104 im Gehäuse gelagert. Auf dem Stator 56 lagert das erste Getrieberad 54. Dieses weist an seinem Außenumfang die Außenverzahnung 60 auf und ist im Inneren mit einem Hohlraum 106 versehen. Der Hohlraum 106 ist mit einer seitlichen Tasche 108 mit Anlagefläche 110 versehen. Ferner erstreckt sich von einer Seitenfläche des ersten Getrieberads 54 aus eine kreissegmentförmige Klaue 112.

Das zweite Getrieberad 66 weist neben seiner Außenverzahnung 72 eine plattenartige Struktur 114 auf, an der eine erste Klaue 116 und eine zweite Klaue 118 angeordnet sind, die sich in axialer Richtung erstrecken. Ferner erkennt man in Figur 4 eine Schraubenfeder 120 mit abgekröpften Enden 122 und 124. Die Schraubenfeder 120 ist derart dimensioniert, dass sie im entspannten Zustand an der Außenumfangsfläche des Reibradabschnitts 62 satt anliegt, jedoch auf dieser abgleiten kann. Zur Montage wird die Schraubenfeder 120 auf den Reibradabschnitt 62 aufgesteckt. Diese Anordnung wird im Hohlraum 106 aufgenommen. Die beiden abgekröpften Enden 122 und 124 erstrecken sich in radialer Richtung so weit nach außen, dass sie, wie im Folgenden im Detail erläutert werden wird, mit den Klauen 112, 116, 118 in Eingriff bringbar sind, ohne dass sie an den den Hohlraum 106 begrenzenden Flächen entlangreiben oder kratzen.

Ferner erkennt man in Figur 4 eine Formfeder 130 mit mehreren gewundenen Schlingen 132, die sich entlang eines Basisstrangs 134 erstrecken. Die beiden Enden 136, 138 greifen ineinander. Die gewundenen Schlingen 132 lassen sich bei Einwirkung einer Kraft F aus ihrer entspannten Stellung in eine komprimierte Stellung komprimieren. Die Formfeder 130 ist in der Tasche 108 angeordnet und liegt mit ihrer letzten Schlinge an der Anlagefläche 110 an.

Man erkennt den zusammengebauten Zustand der Schlingfederkupplung 70 in Figur 5, wobei zu ergänzen ist, dass das abgekröpfte Federende 122 zwischen der Klaue 116 und der Klaue 118 in dem Zwischenraum 140 aufgenommen ist.

Generell wird die vorstehend beschriebene Kraftfahrzeugbremse mit ihrer vorstehend beschriebenen Aktuatorbaugruppe vornehmlich zur Aktivierung einer Feststellbremsfunktion eingesetzt. Dies bedeutet, dass im Betriebsbremsfall der Kolben 18 üblicherweise hydraulisch derart verlagert wird, dass er sich aus dem Gehäuseteile 16 heraus verlagert. Gleichermaßen muss es möglich sein, dass sich der Kolben 18 bei Freigabe des Motors 22 zum Lösen der Bremse im Betriebsbremsfall wieder teilweise oder ganz in seine Ausgangsposition gemäß Figur 2 zurück verlagert. Dies geschieht in der Regel allein durch die Wirkung einer Entspannung am nicht gezeigten Bremsbelag sowie unter Vermittlung der Rückstellfeder 85, ohne dass hierzu ein motorischer Antrieb vom Elektromotor 42 erforderlich wäre. Für den Betriebsbremsfall sei angemerkt, dass relativ geringe Spannkräfte erforderlich sind.

In einer Feststellbremssituation wird der Kolben 18 mit relativ großer Spannkraft zur Erzeugung einer Feststellbremswirkung verlagert und soll in dieser Position dauerhaft gehalten werden, um das Kraftfahrzeug sicher festzustellen. Die erreichte Kolbenposition ist zur Beibehaltung der Feststellbremswirkung unbedingt aufrechtzuerhalten und es ist zu vermeiden, dass sich der Kolben 18 im Laufe der Zeit durch Setzvorgänge in der Getriebeanordnung 26 zurück verlagert. Erst dann, wenn eine aktive Ansteuerung über den Motor 22 erfolgt, mit der die Feststellbremse aktiv gelöst werden soll, kann sich der Kolben 18 wieder in seine Ausgangsposition gemäß Figur 2 zurück verlagern.

Es muss also unterschieden werden zwischen der Betriebsbremssituationen und der Feststellbremssituation, wobei je nach aktuellem Zustand der Bremse ein Kraftfluss vom Kolben 16 zum Motor 22 hin zuzulassen oder zu unterbinden ist. Um dieser Anforderung gerecht zu werden, wird die Schlingfederkupplung 70 in der gezeigten Weise eingesetzt. Die Schlingfederkupplung 70 funktioniert in Wechselwirkung mit den beiden Getrieberädern 54 und 66 wie folgt:
- Zunächst sei der Kraftfluss vom motorseitigen Getrieberad 54 aus betrachtet, d.h. der Fall, bei dem der Motor 22 angetrieben wird und das Getrieberad 54 unter Vermittlung des Planetengetriebes 34 drehantreibt. Hier gibt es zwei Drehrichtungen, nämlich die Drehrichtung des Getrieberads 54 im Gegenuhrzeigersinn zum Spannen der Bremse (Spannen der Betriebsbremse und der Feststellbremse) und die Drehrichtung des Getrieberads 54 im Uhrzeigersinn zum aktiven Lösen der Bremse (Lösen der Feststellbremse).
- Bei einer Drehung des ersten Getrieberads 54 im Gegenuhrzeigersinn entsprechend Pfeil P1 - dies entspricht einer Bewegung zum Verlagern des Kolbens 18 aus dem Gehäuse 16 heraus, d.h. zum Aktivieren der Bremse über den Motor 22 sowohl in einer Betriebsbremssituation als auch in einer Feststellbremssituation - wird die Formfeder 130 über die Anlagefläche 110 gegen die Klaue 116 verschoben. Je größer der Widerstand wird, den die Klaue 116 einer solchen Verschiebung entgegensetzt (d.h. bei steigenden Spannkräften), desto stärker wird die Formfeder 130 komprimiert. Die Schraubenfeder 120 bleibt bei dieser Betätigung im Gegenuhrzeigersinn entsprechend Pfeil P1 wirkungslos, weil ihre Federenden sich frei in dem Spielraum zwischen den Klauen 112, 116 und 118 bewegen können und sie auf dem Reibradabschnitt 62 abgleitet.
- Treten größere Spannkräfte auf, wie dies bei der Aktivierung der Feststellbremse der Fall ist, wenn über den Kolben 18 die Bremsbeläge stark an die Bremsscheibe gedrückt werden müssen, so wird die Formfeder 130 stärker komprimiert. Wenn die Formfeder 130 in Folge einer Drehung entsprechend Pfeil P1 stärker komprimiert wird bedeutet dies, dass sich nun das erste Getrieberad 54 relativ zum zweiten Getrieberad 56 entsprechend der Komprimierung der Formfeder 130 verlagert hat. Die maximale Relativverlagerung ist dadurch bestimmt, dass sich die Klaue 112 mit ihrer Stirnseite 142 unter Vermittlung des abgekröpften Endes 124 an die Klaue 118 und deren Stirnseite 144 anlegt. Ist dieser Zustand erreicht, so ist die Formfeder 130 maximal komprimiert und es wird jede weitere Drehung des Elektromotors 22 über die Getriebeanordnung 26 zur Mutter-Spindel-Anordnung 28 zum weiteren Zuspannen der Feststellbremse übertragen.
- Ist die Feststellbremse zugespannt, so wirken aus der Spannkraft resultierende Reaktionskräfte auf das Getriebe zurück. Diese Reaktionskräfte, die über die Mutter-Spindel-Anordnung 28, das Abtriebszahnrad 74 und die Außenverzahnung 72 auf die Klauen 116 und 118 übertragen werden, versuchen die Klauen 116, 118 in ihre Ausgangsstellung zurückzudrängen, d.h. im Gegenuhrzeigersinn zu bewegen. Sobald aber die Klaue 116 versucht, in ihren Ausgangszustand zurückzukehren, d.h. sich im Gegenuhrzeigersinn zu bewegen, gelangt sie in Eingriff mit dem gekröpften Ende 122 der Schraubenfeder 120. In Folge dieses gegenseitigen Eingriffs wird unter der Bewegungstendenz der Klaue 116 im Gegenuhrzeigersinn die Schraubenfeder 120 um den Reibradabschnitt 62 zugezogen, so dass sich deren Schlingen verengen und an der Außenumfangsfläche des Reibradabschnitts 62 stärker angreifen. Dieses Umschlingen der Außenumfangsfläche des Reibradabschnitts 62 führt dazu, dass die Schraubenfeder 120 nicht weiter auf dieser Außenumfangsfläche abgleiten kann, sondern sozusagen an dieser festhält. Demzufolge kann sich die Klaue 116 nicht in ihre Ausgangsstellung zurück bewegen. Die Feststellbremse bleibt aktiviert. Ein Setzvorgang ist damit ausgeschlossen.
- Zum Lösen der Feststellbremse ist wiederum eine Ansteuerung des Motors 22 erforderlich. Diese erfolgt derart, dass das Getrieberad 54 im Uhrzeigersinn gedreht wird. Bewegt sich das Getrieberad 54 im Uhrzeigersinn entsprechend Pfeil P2 - dies entspricht einer Bewegung zum Verlagern des Kolbens 18 in das Gehäuse 16 hinein, d.h. zum aktiven Lösen der Bremse über den Motor 22 beim Deaktivieren der Feststellbremse - so bewegt sich entsprechend die Klaue 112 ebenfalls im Uhrzeigersinn und löst die Spannung an der Formfeder 130. Darüber hinaus wird die Schraubenfeder 120 gelöst und gibt die Klaue 118 frei. Diese kann sich - der Klaue 112 folgend - zurück bewegen, was unter der Wirkung der Rückstellfeder 85 erfolgt.

Die Schlingfederkupplung 70 hat also die generelle Wirkung, dass sie für die Feststellbremsfunktion sicherstellt, dass eine Drehmomentübertragung vom Motor zur Mutter-Spindel-Anordnung auch bei hohen Spannkräften erfolgt und dass Setzeffekte oder ein unbeabsichtigtes Lösen der Feststellbremse durch die Wirkung der Schlingfederkupplung 70, insbesondere durch die Wirkung der sich dann zuziehenden und fest auf der Außenumfangsfläche des Reibradabschnitt 62 angreifenden Schraubenfeder 120, verhindert wird.

Soll lediglich eine Feststellbremsfunktion realisiert werden, wobei die Betätigung im Betriebsbremsfall rein hydraulisch erfolgt, so ist die Formfeder 130 eine Option und kann weggelassen werden.

Soll mit der Bremse sowohl eine Betriebsbremsfunktion also eine Feststellbremsfunktion unter elektromechanischer Aktivierung vorgesehen sein, so kann zusätzlich die Formfeder 130 eingesetzt werden, die sich in Abhängigkeit von dem aktuellen Spannungszustand mehr oder weniger stark deformiert. Bei geringen Spannkräften, wie sie üblicherweise während einer Betriebsbremsung auftreten, wird die Formfeder 130 überhaupt nicht oder nur in geringem Maße deformiert, so dass sie sozusagen die Schraubenfeder 120 (Schlingfeder) inaktiv hält. Dadurch kann eine Selbsthemmung im Getriebe für die Betriebsbremsfunktion unterbunden werden. Es ist dann ein Kraftfluss durch das Getriebe in beide Richtungen zwischen motorischem Antrieb und Mutter-Spindel-Anordnung möglich. Erst wenn die Formfeder 130 hinreichend stark komprimiert ist, wird sozusagen die Schraubenfeder 120 (Schlingfeder) in ihrer Funktion aktiv und blockiert einen Kraftfluss durch das Getriebe von der Mutter-Spindel-Anordnung zum Elektromotor hin. Die Formfeder 130 ist also in dem gezeigten Ausführungsbeispiel erforderlich, weil beide Bremsfunktionen - Betriebsbremsfunktion und Feststellbremsfunktion - bereitgestellt werden sollen.

Ausgehend von diesem Verständnis für die Ausführungsform gemäß den Figuren 1 bis 5 setzt die Erfindung an einer Optimierung dieser Ausführungsform im Hinblick auf eine günstige Ableitung der Reaktionskräfte im Fall der Selbsthemmung an. Hierzu wird im Folgenden auf die Figuren 6 bis 9 eingegangen.

Man erkennt in Figur 6 das Bremsengehäuse 150, das in üblicher Weise sattelförmig ausgebildet ist und einen Ausnehmungsbereich 152 aufweist, in dem Bremsbeläge (nicht gezeigt) aufgenommen werden und eine Bremsscheibe (nicht gezeigt) in bekannter Weise geführt wird. Ferner erkennt man in Figur 6 schematisch dargestellt den Motor 22 sowie die Getriebeanordnung 26 mit ihren einzelnen Getriebestufen GS1 bis GS3, wobei die Getriebestufen GS1 und GS2 jeweils als Stirnräder mit kämmenden Verzahnungen ausgebildet sind und wobei die Getriebestufe GS3 verdeckt ist. Der Getriebestufe GS2 nachgeschaltet ist die Selbsthemmungsvorrichtung SHV, die beispielsweise in der vorstehend beschriebenen Art und Weise ausgebildet ist, d.h. mit einer Schlingfeder 120.

Die Selbsthemmungsvorrichtung SHV ist zusammen mit der Getriebestufe GS3 in einem topfartigen Gehäuseteil 154 aufgenommen, das einen Flansch 155 mit zwei seitlichen Laschen 156, 158 aufweist. In den beiden Laschen 156, 158 sind Öffnungen 160 vorgesehen, welche Befestigungsbolzen 162 aufnehmen können. Über diese Befestigungsbolzen 162 lässt sich das topfartigen Gehäuseteil 154 an entsprechende Befestigungsabschnitte 164, 166 mit entsprechenden Gewindebohrungen 168 befestigen. Dies bedeutet, dass die Selbsthemmungsvorrichtung SHV in dem topfartigen Gehäuseteil 154 aufgenommen werden kann und fest an dem Gehäuse 150 angebracht werden kann. Das Gehäuseteil 154 kann so als Kraftleitungsglied eingesetzt werden und zuverlässig die in der Selbsthemmungsvorrichtung SHV auftretenden Reaktionskräfte unmittelbar in das Bremsengehäuse 150 ableiten. Es ist im montierten Zustand gehäusefest.

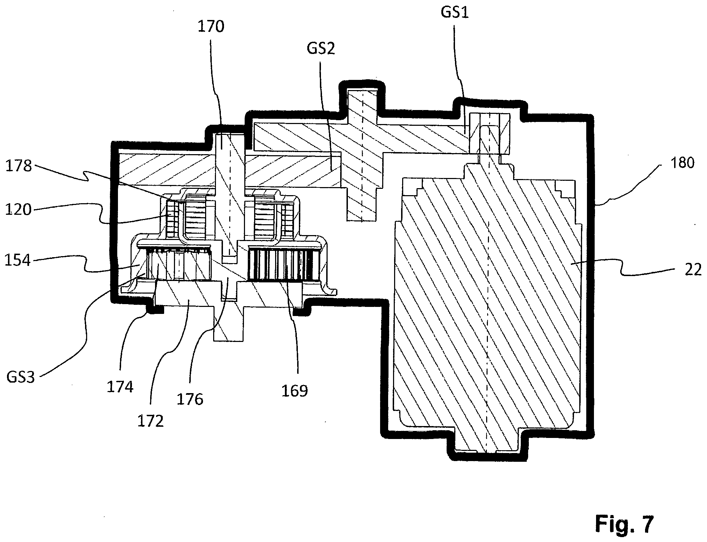

Das als Kraftleitungsglied eingesetzte Gehäuseteil 154 ist dabei vorzugsweise als Tiefziehteil aus einem Stahlblech hergestellt. Die achsenthaltende Schnittansicht gemäß Figur 7 zeigt das Gehäuseteil 154 mit der darin untergebrachten Schlingfeder 120, die im Wesentlichen in der Art und Weise funktioniert, wie vorstehend erläutert dargestellt. Ein wesentlicher Unterschied zu der Ausführungsform gemäß den vorstehend beschriebenen Figuren 1-5 besteht aber darin, dass nicht die erste Getriebestufe GS1 sondern die dritte Getriebestufe GS3, die unmittelbar der Fahrzeugbremse vorgeschaltet ist, als Planetengetriebe ausgebildet und in das Gehäuseteil 154 integriert ist. Das Hohlrad des Planetengetriebes ist unmittelbar in das Gehäuseteil 154 eingeformt. Man erkennt die Innenverzahnung 169. Die Schlingfeder 120 ist in dem Gehäuseteil 154 oberhalb des Planetengetriebes angeordnet. Der Planetenträger 172 ist in nicht näher gezeigter Weise mit der Spindel 76 (Figur 2) der Kraftfahrzeugbremse drehfest gekoppelt ist. Auf dem Planetenträger 172 sind die Planetenräder 174 gelagert, die mit dem Hohlrad 154, 169 kämmen. Ein Sonnenrad 176, das zugleich einen glockenförmig im Bereich aufweist in dem es eine Angriffsfläche 178 für die Schlingfeder 120 bietet, ist drehbar in dem Planetenträger 172 gelagert und drehfest mit der Welle 170 gekoppelt. Die Welle 170 erstreckt sich aus dem Gehäuseteil 154 heraus. Das Planetengetriebe bildet die Getriebestufe GS3. In an sich bekannter Weise sind dann der Welle 170 die einzelnen mit Stirnverzahnungen ausgebildeten Getriebestufen GS1 und GS2 vorgeschaltet. Die Anordnung kann zusätzlich in einem Gehäuse 180 aufgenommen sein, das leichtgewichtig aus Kunststoff hergestellt ist.

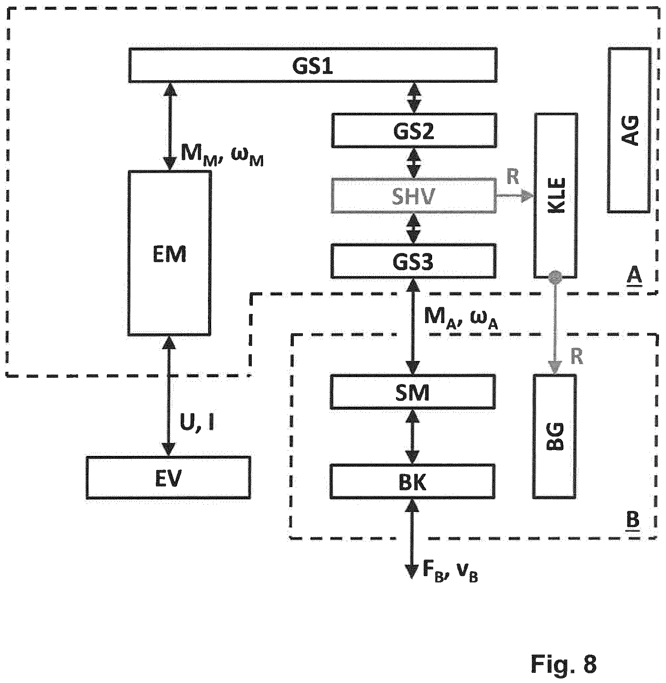

Figur 8 zeigt die Anordnung in schematischer Darstellung. Man erkennt darin, dass der von einer elektrischen Versorgungsquelle EV angetriebene Elektromotor EM über eine Ausgangswelle ein Motordrehmoment M_{M} und mit einer Motorwinkelgeschwindigkeit ω_{M} an eine erste Getriebestufe GS1 der Getriebeanordnung abgibt. Die Getriebeanordnung mit den einzelnen Getriebestufen GS1 bis GS3 und dem Elektromotor EM ist in dem Gehäuseabschnitt AG angeordnet. Dieser Gehäuseabschnitt kann auch als Aktuator-Gehäuseabschnitt AG bezeichnet werden. Zwischen der zweiten Getriebestufe GS2 und der dritten Getriebestufe GS3 ist die Selbsthemmungsvorrichtung SHV angeordnet, in der Reaktionskräfte R auftreten.

Von der dritten Getriebestufe GS3 wird ausgehend ein Drehmoment M_{A} und mit einer Aktuatorwinkelgeschwindigkeit ω_{A} an die Bremse B übertragen. Die Bremse umfasst eine Spindel-Mutter-Anordnung SM eines Kugelgewindetriebs und einen Bremskolben BK, von dem ausgehend die Bremsbetätigungskraft F_{B} mit einer Betätigungsgeschwindigkeit v_{B} auf die Bremsbeläge übertragen wird. Von diesem Bremskolben BK wirken Reaktionskräfte im Bremsfall zurück.

Die Besonderheit dieser Ausführungsform liegt darin, dass die Selbsthemmungsvorrichtung SHV der zweiten Getriebestufe GS2 nachgeschaltet ist und unmittelbar mit dem Kraftleitungsglied KLE gekoppelt ist, nämlich in der in Figuren 6 und 7 gezeigten Weise. Die Selbsthemmungsvorrichtung SHV und die dritte Getriebestufe GS3 sind in dem Kraftleitungsglied KLE integriert. Dadurch lassen sich die Reaktionskräfte R unmittelbar von der Selbsthemmungsvorrichtung SHV aufnehmen und durch entsprechende Anbringung an dem massiv ausgebildeten Gehäuse BG (150 in Figur 6) in dieses einleiten. Dies geschieht in praktischer Ausführung durch das Anflanschen an die Gehäuseabschnitte 164, 166 über die Laschen 156, 158 und die Befestigungsbolzen 162. Die Getriebestufen GS1 und GS2 lassen sich bei dieser Ausführungsform in ein verhältnismäßig schwach ausgebildetes und leichtgewichtiges, insbesondere aus Kunststoffmaterial hergestelltes, Gehäuse AG (180 in Figur 7) einfassen, so dass Gewicht eingespart werden kann. Ferner hat diese Anordnung den Vorteil, dass zur Reduzierung der Reaktionskräfte auch noch die Untersetzung der Getriebestufe GS3 ausgenutzt werden kann.

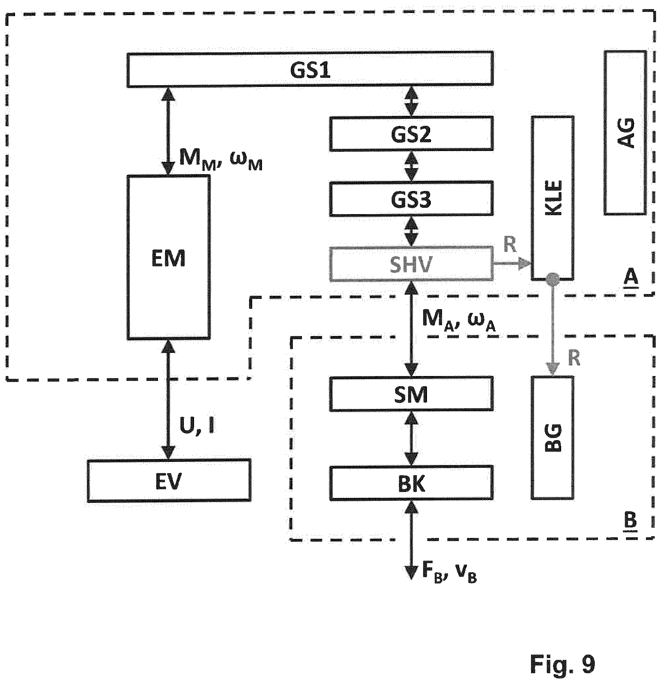

Eine weitere Ausführungsform der Erfindung ist in Figur 9 gezeigt. Darin erkennt man, dass die Selbsthemmungsvorrichtung SHV zwischen der dritten Getriebestufe GS3 und der Bremse B angeordnet ist. Auch bei dieser Ausführungsform wird das Kraftleitungsglied KLE dazu verwendet, um die in der Selbsthemmungsvorrichtung SHV auftretenden Reaktionskräfte unmittelbar auf das Gehäuse BG der Kraftfahrzeugbremse zu übertragen. In der Praxis kann dies beispielsweise dadurch erfolgen, dass das topfartigen Gehäuseteil 154 gegenüber der Darstellung in Fig. 7 etwas kleiner ausgebildet wird und darin allein die Selbsthemmungsvorrichtung SHV auch aufgenommen ist. So kann die Getriebeanordnung beispielsweise in der Weise ausgebildet werden, wie sie in Figur 2 gezeigt ist, wobei die Selbsthemmungsvorrichtung unmittelbar der Bremse vorgeschaltet ist.

Die Vorteile der Erfindung liegen also in der Anordnung der Selbsthemmungsvorrichtung SHV in einem Kraftleitungsglied KLE um die in der Selbsthemmungsvorrichtung SHV auftretenden Reaktionskräfte unmittelbar in das Bremsengehäuse BG bzw. 150 einzuleiten.

## Patentansprüche

1. Kraftfahrzeugbremse, insbesondere kombiniert hydraulisch und elektromechanisch betätigbare Kraftfahrzeugbremse, mit einer Aktuatorbaugruppe (10) umfassend:
- ein Bremsengehäuse (150),
- ein relativ zu dem Bremsengehäuse (150) verlagerbares Stellglied (18) zum hydraulischen oder elektromechanischen Verlagern eines Bremsbelags,
- einen motorischen Antrieb (22),
- eine zwischen dem motorischen Antrieb (22) und dem verlagerbaren Stellglied (18) angeordnete, eine Spindel (76) aufweisende Verlagerungsmechanik,
- eine der Verlagerungsmechanik zugeordnete Getriebeanordnung (26), und
- eine separate Selbsthemmungsvorrichtung (SHV), die dazu ausgebildet ist, die Verlagerungsmechanik bei Bedarf zu blockieren,
wobei die Selbsthemmungsvorrichtung (SHV) in oder an der Getriebeanordnung (26) derart angeordnet ist, dass im Rahmen der Selbsthemmung auftretende Reaktionskräfte (R) der Selbsthemmungsvorrichtung (SHV) über ein Kraftleitungsglied (154, KLE) in das Bremsengehäuse (150) ableitbar sind, und
wobei das Kraftleitungsglied (KLE) als Aufnahmekörper (154) ausgebildet ist, in dem die Selbsthemmungsvorrichtung (SHV) zumindest teilweise aufgenommen ist, wobei der Aufnahmekörper mit dem Bremsengehäuse (150) kraftübertragend gekoppelt ist,
**dadurch gekennzeichnet, dass**
die Selbsthemmungsvorrichtung (SHV) mit einer Schlingfederkupplung (70) ausgebildet ist, die eine Drehmomentübertragung von dem motorischen Antrieb (22) zu der Spindel (76) zulässt und zum Blockieren einer Drehmomentübertragung von der Spindel (76) zum motorischen Antrieb (22) ausgebildet ist,
der Aufnahmekörper (154) als Hohlkörper ausgebildet ist und wenigstens einen Befestigungsflansch (155) aufweist, über den er mit dem Bremsengehäuse (150) kraftübertragend gekoppelt ist,
die Getriebeanordnung (26) wenigstens drei oder vier Getriebestufen (GS1, GS2, GS3) aufweist, wobei die Selbsthemmungsvorrichtung (SHV) innerhalb der Getriebeanordnung (GS1, GS2, GS3) nahe dem verlagerbaren Stellglied angeordnet ist,
die Selbsthemmungsvorrichtung (SHV) der dem verlagerbaren Stellglied (18) nächsten Getriebestufe (GS3) der Getriebeanordnung (26) vorgeschaltet ist und zusammen mit dieser Getriebestufe (GS3) in dem Aufnahmekörper (154) aufgenommen ist, und die Schlingfederkupplung (70) in den Aufnahmekörper (154) integriert ist.

2. Kraftfahrzeugbremse nach Anspruch 1,
**dadurch gekennzeichnet, dass** der Aufnahmekörper (154) als Tiefziehteil aus einem Stahlmaterial hergestellt ist.

3. Kraftfahrzeugbremse nach Anspruch 1 oder 2,
**dadurch gekennzeichnet, dass** der Aufnahmekörper (154) wenigstens zwei seitliche Befestigungslaschen (156, 158) mit Befestigungsbohrungen (160) aufweist.

4. Kraftfahrzeugbremse nach einem der vorangehenden Ansprüche,
**dadurch gekennzeichnet, dass** die Verlagerungsmechanik einen Kugelgewindetrieb (28) mit einer Spindel (76) und einer Mutter (86) aufweist, wobei wahlweise die eine Komponente von Spindel (76) und Mutter (86) drehantreibbar ist und die jeweils andere Komponente von Spindel (76) und Mutter (86) zur Verlagerung des Stellglieds (18) durch Drehantreiben einer Komponente von der Spindel (76) und Mutter (86) innerhalb des Gehäuses (12) linear verlagerbar ist

5. Kraftfahrzeugbremse nach einem der vorangehenden Ansprüche,
**dadurch gekennzeichnet, dass** die erste Getriebestufe (GS1) und die zweite Getriebestufe (GS2) jeweils als Stirnradgetriebe mit einem Untersetzungsverhältnis aus dem Bereich von zwischen 4,4:1 und 6,6:1, vorzugsweise etwa 5,4:1 aufweist.

6. Kraftfahrzeugbremse nach einem der vorangehenden Ansprüche,
**dadurch gekennzeichnet, dass** die dritte Getriebestufe (GS3) als Planetengetriebe mit einem Untersetzungsverhältnis aus dem Bereich von zwischen 6,4:1 und 8,6:1, vorzugsweise etwa 7,125:1 aufweist, wobei das Kraftleitungsglied (154, KLE) vorzugsweise als Hohlrad ausgebildet ist.

7. Kraftfahrzeugbremse nach einem der vorangehenden Ansprüche,
**dadurch gekennzeichnet, dass** der Aktuator (A) ein Gesamtuntersetzungsverhältnis aus dem Bereich von zwischen 115:1 und 400:1, vorzugsweise etwa 208:1 aufweist.

8. Kraftfahrzeugbremse nach einem der vorangehenden Ansprüche,
**dadurch gekennzeichnet, dass** der Schlingfederkupplung (70) ein Schaltelement (130) zugeordnet ist, welches in einer ersten Schaltstellung eine Drehmomentübertragung von der Spindel (76) zu dem motorischen Antrieb (22) zulässt und bei Erreichen einer zweiten Schaltstellung die Schlingfederkupplung (70) dazu veranlasst, eine Drehmomentübertragung von der Spindel (76) zu dem motorischen Antrieb (22) zu blockieren.

## Claims

1. A motor vehicle brake, in particular a combined hydraulically and electromechanically operable vehicle brake, having an actuator subassembly (10) comprising:
- a brake housing (150),
- an actuation member (18) which is movable in relation to the brake housing (150) for hydraulically or electromechanically moving a brake lining,
- a motor drive (22),
- a displacement mechanism having a spindle (76) and being arranged between the motor drive (22) and the movable actuation member (18),
- a gear arrangement (26) assigned to the displacement mechanism, and
- a separate self-locking device (SHV), which is designed to block the displacement mechanism as needed,
wherein the self-locking device (SHV) is arranged in or on the gear train (26) in such a way that reactive forces (R) occurring as part of the self-locking effect of the self-locking device (SHV) can be diverted into the brake housing (15) by means of a force-conducting element (154, KLE), and
wherein the force conducting element (KLE) is designed as a receptacle body (154), in which the self-locking device (SHV) is accommodated at least in part, the receptacle body being coupled to the brake housing (150) in a force-transmitting manner,
**characterized in that**
the self-locking device (SHV) is designed with a wrap spring clutch (70), which allows a transfer of torque from the motor drive (22) to the spindle (76) and is designed for blocking the transfer of torque from the spindle (76) to the motor drive (22),
the receptacle body (154) is designed as a hollow body and has at least one mounting flange (155), by means of which it is coupled to the brake housing (150) in a force-transmitting manner,
the gear train (26) has at least three or four gear stages (GS1, GS2, GS3), wherein
the self-locking device (SHV) is arranged inside the gear train (GS1, GS2, GS3) in the vicinity of the movable actuation member, the self-locking device (SHV) is connected upstream from the gear stage (GS3) of the gear train (26) closest to the movable actuation member (18) and is accommodated together with this gear stage (GS3) in the receptacle body (154), and the wrap spring clutch (70) is integrated into the receptacle body (154).

2. The motor vehicle brake according to claim 1,
**characterized in that** the receptacle body (154) is manufactured as deep-drawn part from a steel material.

3. The motor vehicle brake according to claim 1 or 2,
**characterized in that** the receptacle body (154) has at least two lateral mounting brackets (156, 158) with mounting boreholes (160).

4. The motor vehicle brake according to any one of the preceding claims,
**characterized in that** the displacement mechanism has a ball screw drive (28) with a spindle (76) and a nut (86), wherein the one component of the spindle (76) and the nut (86) can selectively be driven to rotation, and the other component of the spindle (76) and the nut (86) can be displaced linearly for displacement of the actuation member (18) by rotationally driving of one component of the spindle (76) and the nut (86) inside the housing (12).

5. The motor vehicle brake according to any one of the preceding claims,
**characterized in that** the first gear stage (GS1) and the second gear stage (GS2), each as spur gears, have a reduction ratio from the range between 4.4:1 and 6.6:1, preferably approximately 5.4:1.

6. The motor vehicle brake according to any one of the preceding claims,
**characterized in that** the third gear stage (GS3) is designed as a planetary gear having a reduction ratio from the range between 6.4:1 and 8.6:1, preferably approximately 7.125:1, wherein the force conducting element (154, KLE) is preferably designed as a hollow wheel.

7. The motor vehicle brake according to any one of the preceding claims,
**characterized in that** the actuator (A) has a total reduction ratio from the range between 115:1 and 400:1, preferably approximately 208:1.

8. The motor vehicle brake according to any one of the preceding claims,
**characterized in that** a switch element (130), which is assigned to the wrap spring clutch (70), allows, in a first switch position, a transfer of torque from the spindle (76) to the motor drive (22), and on reaching a second switch position, triggers the wrap spring clutch (70) to block a transfer of torque from the spindle (76) to the motor drive (22).

## Revendications

1. Frein de véhicule automobile, en particulier un frein de véhicule automobile à actionnement hydraulique et électromécanique combiné, comprenant un ensemble actionneur (10) comportant :
- un boîtier de frein (150),
- un actionneur (18) déplaçable par rapport au boîtier de frein (150), servant à déplacer une garniture de frein de manière hydraulique ou électromécanique,
- un entraînement motorisé (22),
- un mécanisme de déplacement présentant une broche (76) disposée entre l'entraînement motorisé (22) et l'actionneur (18) déplaçable,
- un ensemble de transmission (26) associé au mécanisme de déplacement, et
- un dispositif de blocage automatique (SHV) séparé, conçu pour bloquer en cas de besoin le mécanisme de déplacement,
ledit dispositif de blocage automatique (SHV) étant disposé dans ou sur l'ensemble de transmission (26) de telle sorte que les forces de réaction (R) du dispositif de blocage automatique (SHV) exercées dans le cadre de l'autoblocage peuvent être déviées par l'intermédiaire d'un organe d'application de force (154, KLE) dans le boîtier de frein (150), et
l'organe d'application de force (KLE) étant conçu comme un corps récepteur (154) dans lequel le dispositif de blocage automatique (SHV) est pour le moins partiellement logé, ce corps récepteur (154) étant couplé en transmission de force au boîtier de frein (150),
**caractérisé en ce que**
le dispositif de blocage automatique (SHV) est conçu doté d'un accouplement à ressort enroulé autorisant la transmission d'un couple de rotation de l'entraînement motorisé (22) à la broche (76) et conçu pour bloquer la transmission d'un couple de rotation de l'entraînement motorisé (22) à la broche (76),
le corps récepteur (154) est conçu sous la forme d'un corps creux et présente au moins une bride de fixation (155) par l'intermédiaire de laquelle il est couplé en transmission de force au boîtier de frein (150),
l'ensemble de transmission (26) présente au moins trois ou quatre étages de transmission (GS1, GS2, GS3), le dispositif de blocage automatique (SHV) étant disposé à l'intérieur de l'ensemble de transmission (GS1, GS2, GS3), à proximité de l'actionneur déplaçable,
le dispositif de blocage automatique (SHV) est monté en amont de l'étage de transmission (GS3) de l'ensemble de transmission (26) le plus proche de l'actionneur (18) déplaçable et logé conjointement avec cet étage de transmission (GS3) dans le corps récepteur (154),
et l'accouplement à ressort enroulé (70) est intégré dans le corps récepteur (154).

2. Frein de véhicule automobile selon la revendication 1,
**caractérisé en ce que** le corps récepteur (154) est fabriqué en acier, sous la forme d'une pièce obtenue par emboutissage.

3. Frein de véhicule automobile selon la revendication 1 ou 2,
**caractérisé en ce que** le corps récepteur (154) présente au moins deux languettes de fixation (156, 158) latérales comportant des alésages de fixation (160).

4. Frein de véhicule automobile selon l'une des revendications précédentes,
**caractérisé en ce que** le mécanisme de déplacement présente une vis à billes (28) comportant une vis (76) et un écrou (86), une composante de la vis (76) et composante de l'écrou (86) pouvant au choix être entraînée en rotation, et l'autre composante de la vis (76) et composante de l'écrou (86) pouvant respectivement être déplacée linéairement à l'intérieur du boîtier (12) suite à l'entraînement en rotation d'une composante de la vis (76) et composante de l'écrou (86), afin de déplacer l'actionneur (18).

5. Frein de véhicule automobile selon l'une des revendications précédentes,
**caractérisé en ce que** le premier étage de transmission (GS1) et le deuxième étage de transmission (GS2) se présentent respectivement sous la forme d'un engrenage droit avec un rapport de réduction compris dans une plage allant de 4,4:1 à 6,6:1, préférentiellement d'environ 5,4:1.

6. Frein de véhicule automobile selon l'une des revendications précédentes,
**caractérisé en ce que** le troisième étage de transmission (GS3) se présente sous la forme d'un train planétaire avec un rapport de réduction compris dans une plage allant de 6,4:1 à 8,6:1, préférentiellement d'environ 7,125:1, l'organe d'application de force (154, KLE) étant préférentiellement conçu sous la forme d'une roue creuse.

7. Frein de véhicule automobile selon l'une des revendications précédentes,
**caractérisé en ce que** l'actionneur (A) présente un rapport de réduction total compris dans une plage allant de 115:1 à 400:1, préférentiellement d'environ 208:1.

8. Frein de véhicule automobile selon l'une des revendications précédentes,
**caractérisé en ce qu'**un élément de commutation (130) est associé à l'accouplement par ressort enroulé (70), lequel, dans une première position de commutation, autorise la transmission à l'entraînement motorisé (22) d'un couple de rotation de la vis (76) et, une fois atteinte une deuxième position de commutation, bloque la transmission à l'entraînement motorisé (22) d'un couple de rotation de la vis (76).
